# EUROPÄISCHE PATENTANMELDUNG

(11) **EP 1 083 373 A2**
(43) Veröffentlichungstag der Anmeldung: **14.03.2001**
(21) Anmeldenummer: 00118556.0
(22) Anmeldetag: 26.08.2000
(51) Int. Cl.: F16K 31/60

(54) **Wasserventil**

(30) Priorität: 07.09.1999 DE 19942547
(71) Anmelder: Friedrich Grohe AG & Co. KG, 58675 Hemer (DE)
(72) Erfinder: Rüth, Andreas, 58675 Hemer (DE); Günther, Michael, 58636 Iserlohn (DE)

(57) **Zusammenfassung**

Bei einem Wasserventil mit einem Hebel (3) zur Einstellung wenigstens der Wasserdurchflussmenge und einem wenigstens eine Ein- und eine Auslassöffnung aufweisenden Gehäuse (1), in dem wenigstens eine ortsfest gehaltene wenigstens eine Einlassöffnung aufweisende Ventilsitzscheibe (5) und eine mit dem Hebel (3) wenigstens linear bewegbare Steuerscheibe (4) angeordnet ist, wobei in der Steuerscheibe (4) wenigstens eine Linearnut (411) ausgebildet ist, in die ein in Längsrichtung zur Linearnut (411) feststehender Führungszapfen (20) einfasst, ist vorgeschlagen, dass die Linearnut (411) in Längsrichtung wenigstens eine Verengung (4110) aufweist und der Führungszapfen (20) an der Anlageseite elastisch zusammenpressbar ist, derart, dass bei der Ventilbetätigung mit dem Eintritt des Führungszapfens (20) in die Verengung (4110) eine erhöhte Betätigungskraft erforderlich ist.

## Beschreibung

Die Erfindung betrifft ein Wasserventil mit einem Hebel zur Einstellung wenigstens der Wasserdurchflussmenge und einem wenigstens eine Ein- und eine Auslassöffnung aufweisenden Gehäuse, in dem wenigstens eine ortsfest gehaltene wenigstens eine Einlassöffnung aufweisende Ventilsitzscheibe und eine mit dem Hebel wenigstens linear bewegbare Steuerscheibe angeordnet sind, wobei in der Steuerscheibe wenigstens eine Linearnut ausgebildet ist, in die ein in Längsrichtung zur Linearnut feststehender Führungszapfen einfasst.

Ein derartiges Wasserventil ist aus der deutschen Offenlegungsschrift DE 34 24 435 A1 bekannt. Hierin ist ein Mischventil offenbart, bei dem eine Radialnut in der aus einer Ventilregelscheibe und einer Äbdeckscheibe gebildeten Steuerscheibe vorgesehen ist. In diese Radialnut greift ein in Längsrichtung der Radialnut feststehender Stift ein, so dass die Radialbewegung zur Einstellung der Durchflussmenge von der Absperrstellung bis zur maximalen Offenstellung begrenzt wird.
Beim Wasserzapfvorgang kommt es bei diesen Ventilen häufig vor, dass bei der Ventilöffnung die maximale Öffnungsstellung eingestellt wird, obwohl vom Benutzer nur eine geringe Wassermenge benötigt wird. Durch unbeabsichtigte Öffnung in die maximale Öffnungsposition kann somit ein nicht benötigter erheblicher Wasserverbrauch auftreten, der insbesondere beim Zapfen von Warmwasser nicht unerhebliche Kosten verursachen kann.

Der Erfindung liegt die Aufgabe zugrunde, bei dem im Oberbegriff des Anspruchs 1 angegebenen Wasserventil zwischen der Absperr- und der maximalen Öffnungsstellung wenigstens eine überwindbare Anschlagausbildung zu schaffen, die verhältnismässig einfach und kostengünstig herstellbar ist, wobei ein relativ langer gleichbleibender Gebrauchszeitraum gegeben sein soll.

Diese Aufgabe wird erfindungsgemäss dadurch gelöst, dass die Linearnut in Längsrichtung wenigstens eine Verengung aufweist und der Führungszapfen an der Anlageseite elastisch zusammenpressbar ist, derart, dass bei der Ventilbetätigung mit dem Eintritt des Führungszapfens in die Verengung eine erhöhte Betätigungskraft erforderlich ist.
Weitere Ausgestaltungen der Erfindung sind in den Ansprüchen 2 bis 15 angegeben.

Mit den erfindungsgemäss vorgeschlagenen Massnahmen wird insbesondere erreicht, dass mit einfachen Mitteln eine Begrenzung der Öffnungsbewegung erreicht wird, die durch eine erhöhte Krafteinlenkung in den Betätigungsgriff (Druckpunktsteuerung) vom Benutzer überwindbar ist. Es wird somit eine kontrollierte Wassermengenregulierung ermöglicht, mit der sicher eine unbeabsichtigte maximale Ventilöffnung verhindert werden kann.

Ausführungsbeispiele der Erfindung sind in der Zeichnung dargestellt und werden im folgenden näher beschrieben. Es zeigt
- Fig. 1: eine in einen Armaturenkörper einsetzbare Mischventilkartusche im Längsschnitt;
- Fig. 2: die in Fig. 1 gezeigte Mischventilkartusche in der Schnittebene II;
- Fig. 3: einen Teil der in Fig. 1 gezeigten Mischventilkartusche in vergrösserter Darstellung in Absperrstellung;
- Fig. 4: den in Fig. 3 gezeigten Teil in der Schnittebene IV;
- Fig. 5: den in Fig. 4 gezeigten Teil der Mischventilkartusche in der halb geöffneten Stellung in der Druckpunktposition;
- Fig. 6: den in Fig. 4 gezeigten Teil in der maximalen Öffnungsposition der Mischventilkartusche;
- Fig. 7: ein anderes Ausführungsbeispiel der Linearnut mit mehreren hintereinander angeordneten Verengungen.

Der Einfachheit halber sind bei den Ausführungsbeispielen in der Zeichnung gleiche oder entsprechende Elemente mit jeweils gleichen Bezugszeichen versehen.

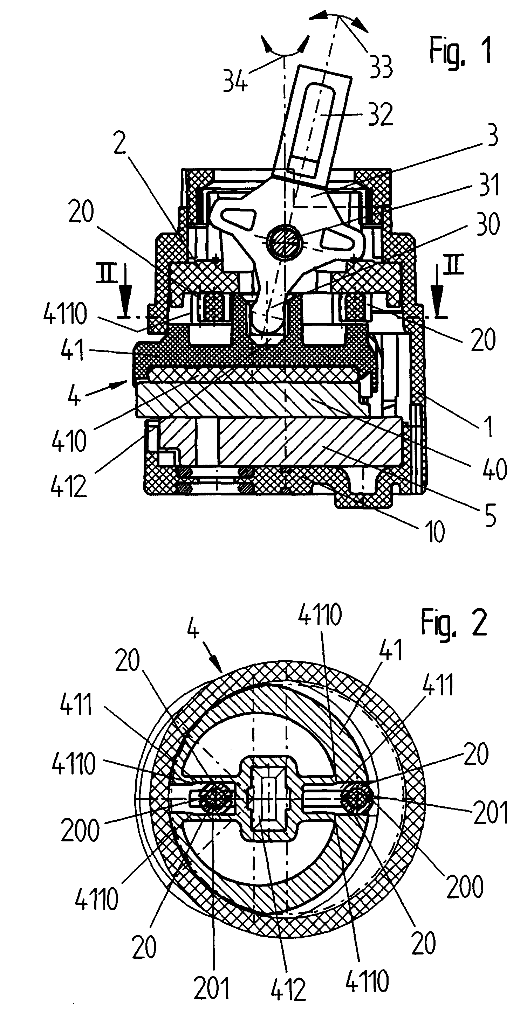

In Fig. 1 der Zeichnung ist eine Mischventilkartusche dargestellt, die in eine in der Zeichnung nicht dargestellte Aufnahmekammer eines Sanitärarmaturenkörpers einsetzbar ist. Die Mischventilkartusche ist hierbei in einem Gehäuse 1 ausgebildet, welches mit einem Boden 10 verschlossen ist. Im Boden 10 sind Anschlussöffnungen für die separate Zuleitung von Kalt- und Warmwasser sowie eine Auslassöffnung für die Abführung von Mischwasser vorgesehen, wie es aus dem Stand der Technik bekannt ist.
In dem Gehäuse 1 ist ein Lagerteil 2 drehbar, aber axial festliegend angeordnet. In dem Lagerteil 2 ist ein Hebel 3 mit einem Hebellager 31 verschwenkbar angeordnet. An einem äusseren Hebelarm 32 kann hierbei ein Betätigungsgriff - in der Zeichnung nicht dargestellt - befestigt werden.
An der inneren Stirnseite des Lagerteils 2 ist eine Steuerscheibe 4 mit einer Abdeck- und Führungshaube 41 angelagert. An der gegenüberliegenden Stirnseite der Abdeck- und Führungshaube 41 ist formschlüssig eine Hartstoffscheibe 40 unter Zwischenlage einer Dichtung 410 angeordnet. Die Hartstoffscheibe 40 ist an der gegenüberliegenden Seite geglättet ausgebildet und liegt an einer ebenfalls geglätteten aus Hartstoff hergestellten, ortsfest gehaltenen Ventilsitzscheibe 5 an. Die Ventilsitzscheibe 5 hat hierbei jeweils eine Durchtrittsöffnung für das zufliessende Kaltwasser und Warmwasser sowie wenigstens eine weitere Durchtrittsöffnung für das abfliessende Mischwasser, wobei die drei Öffnungen gedichtet mit den Öffnungen im Boden 10 in Verbindung stehen. In der Hartstoffscheibe 40 ist ein oder sind mehrere Überströmkanäle vorgesehen, mit denen die separaten Kaltwasser- und Warmwasserzuflussöffnungen mit der Abflussöffnung in Verbindung bringbar sind. Hierzu ist ein innerer Hebelarm 30 an dem Hebel 3 ausgebildet, der in eine entsprechende Öffnung 412 im Zentrum der Abdeck- und Führungshaube 41 an der der Hartstoffscheibe 40 abgekehrten Stirnseite eingreift. Durch eine Drehung des Hebels 3 in eine Richtung des Pfeils 34 kann somit das Mischungsverhältnis des zufliessenden Kalt- und Warmwassers eingestellt werden. Durch ein Verschwenken des Hebels 3 um das Hebellager 31 in Richtung der Pfeile 33 kann die Gesamtausflussmenge des von der Mischventilkartusche erzeugten Mischwassers eingestellt werden.

Zur Begrenzung der Öffnungsbewegung der Mischventilkartusche ist zu beiden Seiten der Öffnung 412 auf dem Durchmesser jeweils eine Linearnut 411 in der Abdeck- und Führungshaube 41 ausgebildet. Jede der beiden Linearnuten 411 ist etwa ab halber Gesamtlänge mit einer Verengung 4110 symmetrisch an beiden Seitenflächen versehen. Die Verengung 4110 an jeder Seitenfläche beträgt etwa ein Zehntel der maximalen Breite 4111 der Linearnut 411.
Passend zu den beiden Linearnuten 411 ist an der Stirnseite des Lagerteils 2 jeweils ein Führungszapfen 20 angeformt. Der Führungszapfen 20 ist rohrförmig ausgebildet und mit einem im Durchmesser angeordneten Schlitz 200 versehen, so dass die beiden Hälften des Führungszapfens 20 gegeneinander federn können. Zusätzlich ist in dem rohrförmigen Innenraum eine Feder 201 in Form eines gummielastischen Einsatzes vorgesehen.
Der Aussendurchmesser der beiden Führungszapfen 20 ist dabei so dimensioniert, dass er leichtgängig in den erweiterten Bereich der Linearnut 411 einsteckbar und radial verschiebbar ist.
Wird nun mit dein Hebel 3 die Steuerscheibe 4 radial von der Absperrstellung in Richtung auf die maximale Öffnungsstellung verschoben, so gelangen die Führungszapfen 20 relativ leichtgängig bis zur Anlage an der jeweiligen Verengung 4110 (Druckpunktstellung). Mit einer erhöhten Krafteinlenkung durch den Benutzer kann nun im Bereich der Verengung 4110 der jeweilige Führungszapfen 20 radial entgegen der Kraft der Feder 201 zusammengepresst werden, so dass hiernach eine weitere Radialverschiebung bis zur maximalen Öffnung erfolgen kann.

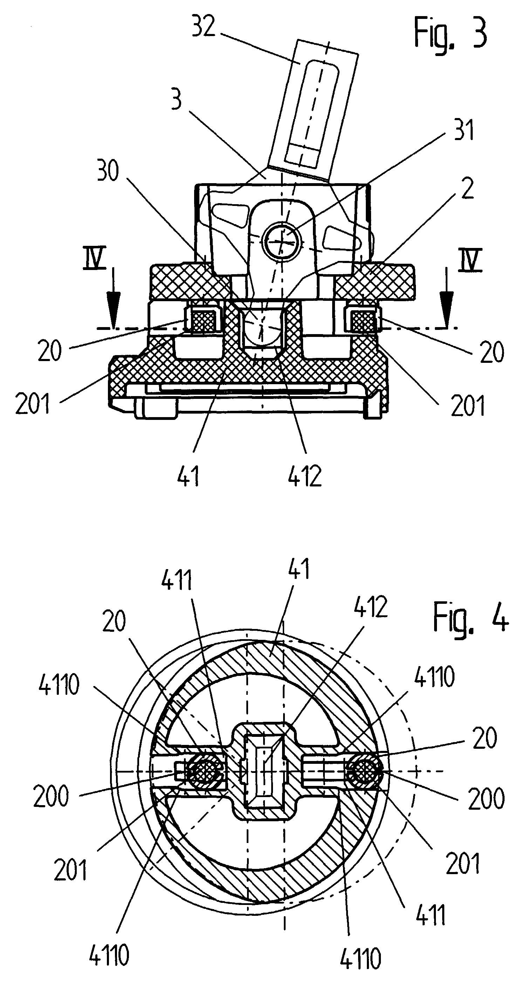

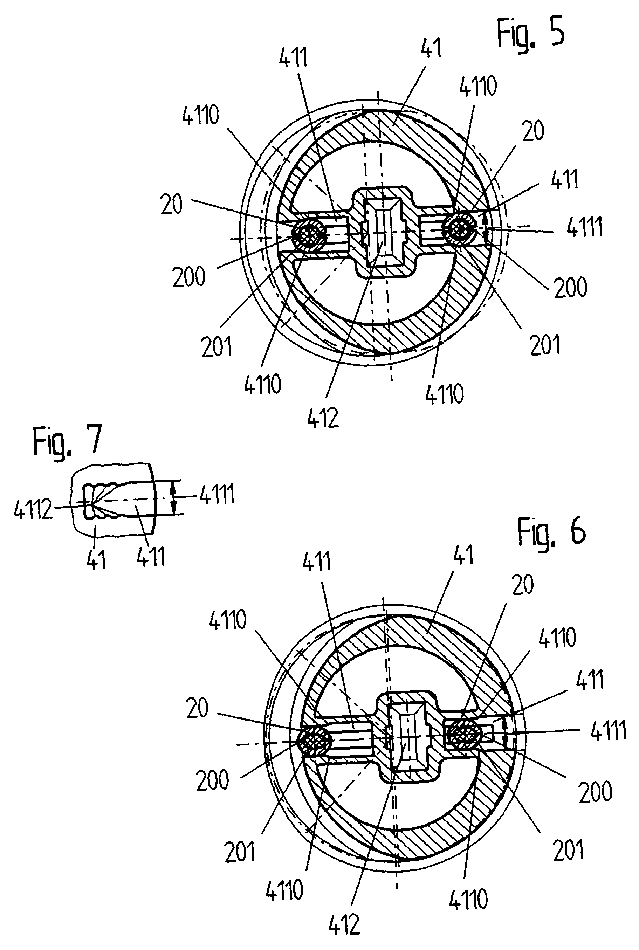

In Fig. 1 bis 4 ist die Mischventilkartusche in der Absperrstellung gezeigt. Wird nun mit dem Hebel 3 (Pfeil 33) die Steuerscheibe 4 radial verschoben, so gelangen die Einlassöffnungen mit der Auslassöffnung in der Ventilsitzscheibe 5 zunehmend in Überdeckung. Die Steuerscheibe 4 wird von links nach rechts bewegt. Wenn die beiden Führungszapfen 20 jeweils an den Verengungen 4110 zur Anlage gelangen, ist die Mischventilkartusche etwa zur Hälfte geöffnet. Diese Ventilstellung ist in Fig. 5 dargestellt. In dieser Ventilstellung empfindet der Benutzer einen Druckpunkt, so dass der Benutzer die Überlegung anstellen wird, ob der Öffnungsgrad der Mischventilkartusche ausreichend ist. Reicht die abgegebene Wassermenge pro Zeiteinheit nicht aus, so wird der Benutzer eine erhöhte Krafteinlenkung vornehmen und damit die von der Verengung ausgebildete Anschlagwirkung überwinden und die maximale Öffnung des Ventils erreichen, wie es in Fig. 6 der Zeichnung dargestellt ist. Beim Schliessvorgang der Mischventilkartusche passieren die Führungszapfen 20 wiederum die Verengungen 4110, wonach die anfangs vorhandene Leichtgängigkeit wieder hergestellt ist.

Mit Vorteil können die Führungszapfen 20 einstückig mit der Herstellung des Lagerteils 2 aus Kunststoff im Spritzgiessverfahren hergestellt werden. Hierbei hat sich als Werkstoff Polyoximethylen (POM) als besonders günstig und verschleissfest erwiesen. Auch die Linearnuten 411 mit ihren Verengungen 4110 können zweckmässig bei der Herstellung der Abdeck- und Führungshaube im Spritzgiessverfahren miteingeformt werden. Auch hier hat sich der Werkstoff Polyoximethylen (POM) als vorteilhaft ausgezeichnet.

In Fig. 7 der Zeichnung ist ein anderes Ausführungsbeispiel für die Ausbildung der Linearnut 411 dargestellt. Hierbei sind als Verengung an der Seitenwandung der Linearnut 411 vorstehende Zähne 4112 vorgesehen, wobei zwischen den Zähnen 4112 jeweils eine Flankenwandung entsprechend der Wandung der Führungszapfen 20 ausgebildet ist. Hierdurch kann eine gerasterte Öffnungsbewegung im Endbereich zur maximalen Ventilöffnung erreicht werden.

Bei den vorstehend dargestellten Ausführungsbeispielen sind jeweils zwei Linearnuten 411 mit jeweils einem zugehörigen Führungszapfen 20 dargestellt. Selbstverständlich kann die erfindungsgemässe, durch erhöhte Krafteinlenkung überwindbare Anschlagausbildung auch mit nur einer Linearnut 411 und einem Führungszapfen 20 oder mit einer Vielzahl von parallel geschalteten Linearnuten 411 mit Führungszapfen 20 realisiert werden.

Bei den vorstehend dargestellten Ausführungsbeispielen ist ferner eine Mischventilkartusche vorgesehen, bei der in einem ersten Freiheitsgrad mit einer Linearbewegung die Mengenregulierung und in einem zweiten Freiheitsgrad mit einer Drehbewegung das Mischungsverhältnis des zufliessenden Kalt- und Warmwassers eingestellt werden kann.

Die erfindungsgemässe, durch erhöhte Krafteinlenkung überwindbare Anschlagausbildung kann aber auch bei einfachen Mengenregulierventilen mit einem Betätigungsbereich in einem Freiheitsgrad oder auch bei einem Mehrwegeventil, bei dem in einem ersten Freiheitsgrad, einer Drehbewegung, unterschiedliche Verbraucher angesteuert werden können, während in einem zweiten Freiheitsgrad, einer Linearbewegung, die Durchflussmenge bestimmt wird, für eine Begrenzung der maximalen Durchflussmenge eingesetzt werden.

## Patentansprüche

1. Wasserventil mit einem Hebel (3) zur Einstellung wenigstens der Wasserdurchflussmenge und einem wenigstens eine Ein- und eine Auslassöffnung aufweisenden Gehäuse (1), in dem wenigstens eine ortsfest gehaltene wenigstens eine Einlassöffnung aufweisende ventilsitzscheibe (5) und eine mit dem Hebel (3) wenigstens linear bewegbare Steuerscheibe (4) angeordnet ist, wobei in der Steuerscheibe (4) wenigstens eine Linearnut (411) ausgebildet ist, in die ein in Längsrichtung zur Linearnut (411) feststehender Führungszapfen (20) einfasst, dadurch gekennzeichnet, dass die Linearnut (411) in Längsrichtung wenigstens eine Verengung (4110) aufweist und der Führungszapfen (20) an der Anlageseite elastisch zusammenpressbar ist, derart, dass bei der Ventilbetätigung mit dem Eintritt des Führungszapfens (20) in die Verengung (4110) eine erhöhte Betätigungskraft erforderlich ist.

2. Wasserventil nach Anspruch 1, dadurch gekennzeichnet, dass der Führungszapfen (20) an einem Lagerteil (2) für den Hebel (3) befestigt ist.

3. Wasserventil nach Anspruch 1 oder 2, dadurch gekennzeichnet, dass der Führungszapfen (20) rohrförmig ausgebildet ist und parallel zu den Seitenwänden der Linearnut (411) einen durch den Mittelpunkt führenden Schlitz (200) aufweist, der so bemessen ist, dass eine oder beide Hälften des Führungszapfens (20) elastisch auf die Breite der Verengung (4110) zusammendrückbar sind.

4. Wasserventil nach Anspruch 3, dadurch gekennzeichnet, dass in dem rohrförmigen Führungszapfen (20) eine Feder (201) vorgesehen ist, die die beiden Hälften in Richtung auf die Seitenwandung der Linearnut (411) drückt.

5. Wasserventil nach Anspruch 4, dadurch gekennzeichnet, dass als Feder (201) ein gummielastischer Körper vorgesehen ist, der in dem rohrförmigen Führungszapfen (20) angeordnet ist.

6. Wasserventil nach wenigstens einem der Ansprüche 1 bis 5, dadurch gekennzeichnet, dass in der Linearnut (411) die Verengung (4110) sich in Ventilöffnungsrichtung im Endbereich erstreckt.

7. Wasserventil nach Anspruch 6, dadurch gekennzeichnet, dass die Verengung (4110) in der Linearnut (411) etwa nach der Hälfte des Ventilöffnungswegs beginnt.

8. Wasserventil nach wenigstens einem der Ansprüche 1 bis 7, dadurch gekennzeichnet, dass die Verengung von einem oder mehreren, an der Seitenwandung der Linearnut (411) vorstehenden Zähnen (4112) gebildet ist.

9. Wasserventil nach wenigstens einem der Ansprüche 1 bis 8, dadurch gekennzeichnet, dass die Verengung (4110) oder die Zähne (4112) an beiden Längsseiten der Linearnut (411) ausgebildet ist bzw. sind und an jeder Längsseite etwa ein Zehntel der maximalen Breite (4111) der Linearnut (411) beträgt.

10. Wasserventil nach wenigstens einem der Ansprüche 2 bis 9, dadurch gekennzeichnet, dass der Führungszapfen (20) einstückig an einem aus Kunststoff hergestellten Lagerteil (2) des Gehäuses (1) ausgebildet ist.

11. Wasserventil nach wenigstens einem der Ansprüche 2 bis 10, dadurch gekennzeichnet, dass das Lagerteil (2) drehbar in dem Gehäuse (1) angeordnet ist.

12. Wasserventil nach wenigstens einem der Ansprüche 1 bis 11, dadurch gekennzeichnet, dass die Steuerscheibe (4) aus einer Hartstoffscheibe (40), die an der ebenfalls aus Hartstoff hergestellten Ventilsitzscheibe (5) anliegt, und einer Abdeck- und Führungshaube (41) aus Kunststoff, vorzugsweise Polyoximethylen (POM), gebildet ist, in der an der von der Hartstoffscheibe (40) abgekehrten Seite wenigstens eine Linearnut (4111) ausgebildet ist.

13. Wasserventil nach einem der Ansprüche 2 bis 12, dadurch gekennzeichnet, dass das Lagerteil (2) aus Polyoximethylen (POM) hergestellt ist.

14. Wasserventil nach wenigstens einem der vorhergehenden Ansprüche, dadurch gekennzeichnet, dass mehrere Linearnuten (411) vorgesehen sind, in die jeweils ein Führungszapfen (20) einfasst, so dass sie parallel ihre Wirkung entfalten.

15. Wasserventil nach Anspruch 14, dadurch gekennzeichnet, dass der Hebel (3) im Zentralbereich des Lagerteils (2) gelagert ist und mit einem inneren Hebelarm (30) im Zentrum der Abdeck- und Führungshaube (41) in Eingriff steht, wobei auf der Durchmesserlinie radial versetzt zu beiden Seiten des Hebels (3) ein Führungszapfen (20) an dem Lagerteil (2) ausgebildet ist, die jeweils mit einer separaten Linearnut (411) in der Abdeck- und Führungshaube (41) in Eingriff stehen.
